(19) **Europäisches Patentamt**
**European Patent Office**
**Office européen des brevets**

(11) **EP 1 848 208 A2**

(12) **EUROPEAN PATENT APPLICATION**

(43) Date of publication:
 **24.10.2007 Bulletin 2007/43**

(51) Int Cl.:
 **H04N 5/57** (2006.01)

(21) Application number: **07007449.7**

(22) Date of filing: **11.04.2007**

(84) Designated Contracting States:
 **AT BE BG CH CY CZ DE DK EE ES FI FR GB GR HU IE IS IT LI LT LU LV MC MT NL PL PT RO SE SI SK TR**
 Designated Extension States:
 **AL BA HR MK YU**

(30) Priority: **18.04.2006 JP 2006114562**

(71) Applicant: **Pioneer Corporation**
 **Tokyo 153-8654 (JP)**

(72) Inventors:
 • **Kato, Akira**
  **c/o Pioneer Corporation**
  **Tokyo 143-8564 (JP)**

 • **Ishigami, Hirokuni**
  **c/o Pioneer Corporation**
  **Tokyo 143-8564 (JP)**
 • **Nitta, Takafumi**
  **c/o Pioneer Corporation**
  **Tokyo 143-8564 (JP)**
 • **Ando, Masanori**
  **c/o Pioneer Corporation**
  **Tokyo 143-8564 (JP)**

(74) Representative: **Grünecker, Kinkeldey, Stockmair & Schwanhäusser**
 **Anwaltssozietät**
 **Maximilianstrasse 58**
 **80538 München (DE)**

(54) **Image processing apparatus, image processing method, and image processing program**

(57) Quality of an image inputted from a video input terminal is adjusted at an image processing unit using a parameter set fitted for the image selected from a plurality of parameter sets received in a parameter set receiving unit. The using parameter set is stored in a parameter memory. A scene judging unit generates a hue histogram of each frame. When a change of the parameter set is necessary, a parameter mixing unit gradually replaces values of the parameter set stored in the parameter memory with a new parameter set selected by a selector. The replaced parameter set is stored in the parameter memory and is used in the image processing unit for adjusting the image quality.

FIG. 1

**Description**

**Cross Reference to Related Applications**

This application is on the basis of Japanese Patent Application No. 2006-114562, the contents of which are hereby incorporated by reference.

**Background of the Invention**

**Field of the Invention**

The present invention relates to an image processing apparatus, an image processing method, and an image processing program for adjusting an image quality corresponding to a property of an image.

**Description of the related art**

Conventionally, methods described in Patent Document 1 to 3 are used as an image processing method for correcting brightness, hue, and the like of an image. According to the image processing method described in the Patent Document 1, an inputted image signal (RGB) is converted to a colorimetric signal (hue, brightness, and chroma), then a histogram is generated, and the chroma and the brightness of the image is adjusted in a way that a figure of the histogram comes to be flat based on a peak value of the histogram. According to the image processing method described in the Patent Document 2, the inputted signal (RGB) is converted to an HSL signal (hue, chroma, and brightness), then the histogram is generated, and the chroma and the brightness are adjusted ($\gamma$ correction) based on the histogram. According to the image processing method described in the Patent Document 3, two-dimensional histogram is generated based on the hue and the chroma of the image, then the image is divided into a plurality of hue areas based on the histogram, and each share of each area is calculated. Then, a low chroma threshold value is calculated and a low threshold pixel is extracted, so that a condition of a gray balance adjustment is derived, and the gray balance adjustment is carried out.

[Patent Document 1] Japanese Published Patent Application No. 2000-316095
[Patent Document 2] Japanese Published Patent Application No. 2001-230941
[Patent Document 3] Japanese Published Patent Application No. 2005-192158

There are problems described below when the image processing methods described on the Patent Documents 1 to 3 are applied to moving images. In the moving image, image quality parameters (hue, brightness, and the like) and quantity of adjustment are varied depending on contents such as movie or news, and on various scenes in the contents. Namely, in the moving image, the image quality parameter must be successively adjusted corresponding to the scenes. However, if the image quality parameter is rapidly changed, the image quality of a displayed image is largely changed so that a viewer feels a sense of incompatibility.

Accordingly, an object of the present invention is to provide an image processing apparatus, an image processing method, and an image processing program to reduce a rapid image quality change when image quality of a moving image is adjusted and to prevent a viewer of the moving image from feeling a sense of incompatibility.

**Summery of the Invention**

In order to attain the object, according to the present invention, there is provided an image processing apparatus having an image adjusting device for adjusting image quality of an inputted image with a predetermined group of image quality parameters, said apparatus including:

a group of image quality parameters receiving device for receiving a plurality of groups of image quality parameters including at least one image quality parameter;
a feature quantity extracting device for extracting data indicating feature quantity of the inputted image from the inputted image;
a change judging device for judging necessity of change of the image quality parameter used for the adjusting device based on the data indicating the feature quantity;
an identifying device for identifying a new group of image quality parameters from among the groups of image quality parameters received in the receiving device when the change judging device judges that changing the group of image quality parameters is necessary;

a selecting device for selecting the group of image quality parameters identified by the identifying device from the receiving device; and

a parameter-replacing device for gradually replacing values of the image quality parameter included in a former selected group of image quality parameters with values of the image quality parameter included in the group of image quality parameters identified by the identifying device and selected by the selecting device when the judging device judges that changing the group of image quality parameters is necessary, said parameter-replacing device making the adjusting device use the group of image quality parameters.

According to another aspect of the present invention, there is provided an image processing method of adjusting image quality of an inputted image with a predetermined group of image quality parameters, said method including the steps of:

extracting data indicating feature quantity of the inputted image from the inputted image;

identifying and selecting a group of image quality parameters corresponding to the inputted image from among the groups of image quality parameters including at least one of the image quality parameter for adjusting the inputted image based on the data indicating the feature quantity; and

adjusting and replacing gradually values of the image quality parameter included in a before-changed group of image quality parameters with values of the image quality parameter included in a group of image quality parameters selected after judging a change thereof, when changing the group of image quality parameters used for adjusting is necessary based on the data indicating the feature quantity.

According to another aspect of the present invention, there is provided an image processing program for operating a computer of an image processing apparatus for adjusting image quality of an inputted image with a predetermined group of image quality parameters, said program including:

an image adjusting device for adjusting image quality of the inputted image with the image quality parameter;

a group of image quality parameters receiving device for receiving a plurality of groups of image quality parameters including at least one image quality parameter used by the adjusting device;

a feature quantity extracting device for extracting data indicating feature quantity of the inputted image from the inputted image;

a change judging device for judging necessity of change of the image quality parameter used for the adjusting device based on the data indicating the feature quantity;

an identifying device for identifying a new group of image quality parameters from among the groups of image quality parameters received in the receiving device when the change judging device judges that changing the groups of image quality parameters is necessary;

a selecting device for selecting the group of image quality parameters identified by the identifying device from the receiving device; and

a parameter-replacing device for gradually replacing values of the image quality parameter included in a former selected group of image quality parameters with values of the image quality parameter included in the group of image quality parameters identified by the identifying device and selected by the selecting device when the judging device judges that changing the group of image quality parameters is necessary, said parameter-replacing device making the adjusting device use the group of image quality parameters.

These and other objects, features, and advantages of the present invention will become more apparent upon reading of the following detailed description along with the accompanied drawings.

## Brief Description of the Drawings

Fig. 1 is a block diagram of an image processing apparatus according to a first embodiment of the present invention.
Fig. 2 is an explanatory view of a replacing operation of parameter set of the image processing apparatus shown in Fig. 1.
Fig. 3 is a block diagram of a computer of the image processing apparatus according to a second embodiment of the present invention.
Fig. 4 is a flowchart of selecting parameter set in an image processing program operated by the image processing apparatus shown in Fig. 3.
Fig. 5 is a flowchart of adjusting image quality in the image processing program operated by the image processing apparatus shown in Fig. 3.
Fig. 6 is a figure showing an example of dividing a display screen into blocks when image quality is adjusted.

## Detailed Description of the Preferred Embodiments

An image processing apparatus according to an embodiment of the present invention will be explained. In the image processing apparatus, a feature quantity extracting device extracts data indicating feature quantity of an inputted image, and an identifying device identifies a new group of image quality parameters corresponding to the inputted image based on the data indicating the feature quantity, then a selecting device selects a group of image quality parameters. When a change judging device judges that a change of the group of image quality parameters is necessary owing to a change of the data indicating the feature quantity, the identifying device identifies a new image quality parameter from among the groups of image quality parameters received in a group of image quality parameters receiving device, the selecting device selects the identified group of image quality parameters, a parameter-replacing device gradually replaces values of the image quality parameter included in former selected group of image quality parameters with values of the image quality parameter included in the selected group of image quality parameters, and the parameter-replacing device makes an adjusting device use the replacing group of image quality parameters. Thus, the image quality is gradually changed so that in the moving image, when the image quality parameter is changed, a change of the image quality is small and a viewer hardly feels a sense of incompatibility.

The image processing apparatus may further include a memory device for memorizing the group of image quality parameters used by the adjusting device, the parameter-replacing device may gradually replace values of the image quality parameter included in the group of image quality parameters stored in the memory device with values of the image quality parameter included in the group of image quality parameters selected by the selected device, and the parameter-replacing device may make the adjusting device use the replacing group of image quality parameters. Thus, when a change to a new group of image quality parameters is required during replacing the values of the image quality parameter, the replacing image quality parameter can be replaced with the values of the new image quality parameter. Therefore, even if the number of the groups of image quality parameters previously received in the receiving device is small, various values of the image quality parameter can be used.

Further, the feature quantity extracting device may extract data indicating feature quantity at every one frame. Thus, in the moving image, a judging accuracy of necessity of changing the group of image quality parameters is improved.

Further, the data indicating the feature quantity extracted by the extracted device may be processed to a histogram. Thus, the necessity of changing the group of image quality parameters is judged easily based on the feature quantity of the image.

Further, the image quality parameter included in the group of image quality parameters may include at least one of brightness, sharpness, hue, and chroma. Thus, the image quality of the image can be adjusted more minutely.

Further, the image processing apparatus may further include a replacing time changing device for changing the replacing time when the replacing device replaces the values of the image quality parameter included in the employed group of image quality parameters. Thus, when a degree of change of the scene is large, the replacing time may be short, while the degree of change of the scene is small, the replacing time may be long. Thus, according to the image, the image quality is adjusted for preventing the viewer from feeling a sense of incompatibility.

Further, in the image processing method according to an embodiment of the present invention, the data indicating the feature quantity of the inputted image is extracted, and the group of image quality parameters corresponding to the inputted image is identified and selected based on the data indicating the feature quantity. When a change of the data indicating the feature quantity is detected and the necessity of changing the group of image quality parameters is occurred, the replacing device gradually replaces the values of the image quality parameter included in the old group of image quality parameters with the values of the image quality parameter included in the new group of image quality parameters, and the adjusting device adjusts the image quality using the replacing image quality parameter. Thus, the image quality of the image is gradually changed, so that in the moving image, when the image quality parameter is changed, the change of the image quality is small, and the viewer hardly feels the sense of incompatibility.

Further, in the image processing program according to the embodiment of the present invention, the feature quantity extracting device extracts the data indicating feature quantity of the inputted image. When the change judging device judges the change of the data indicating the feature quantity and the change of the group of the image quality parameters is required, the identifying device identifies the group of image quality parameters corresponding to the image, and the selecting device selects the group of image quality parameters from the receiving device. Then, a parameter-replacing device gradually replaces values of the image quality parameter included in former selected group of image quality parameters with values of the image quality parameter included in the selected group of image quality parameters, and the parameter-replacing device makes an adjusting device use the replacing group of image quality parameters. Thus, the image quality is gradually changed so that in the moving image, when the image quality parameter is changed, a change of the image quality is small and a viewer hardly feels a sense of incompatibility.

[First embodiment]

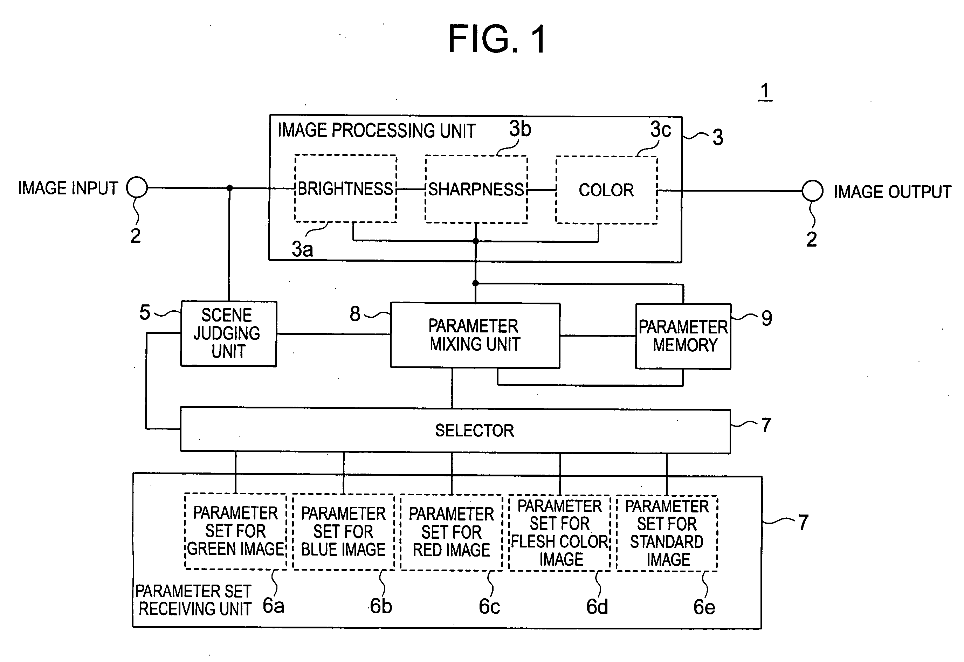

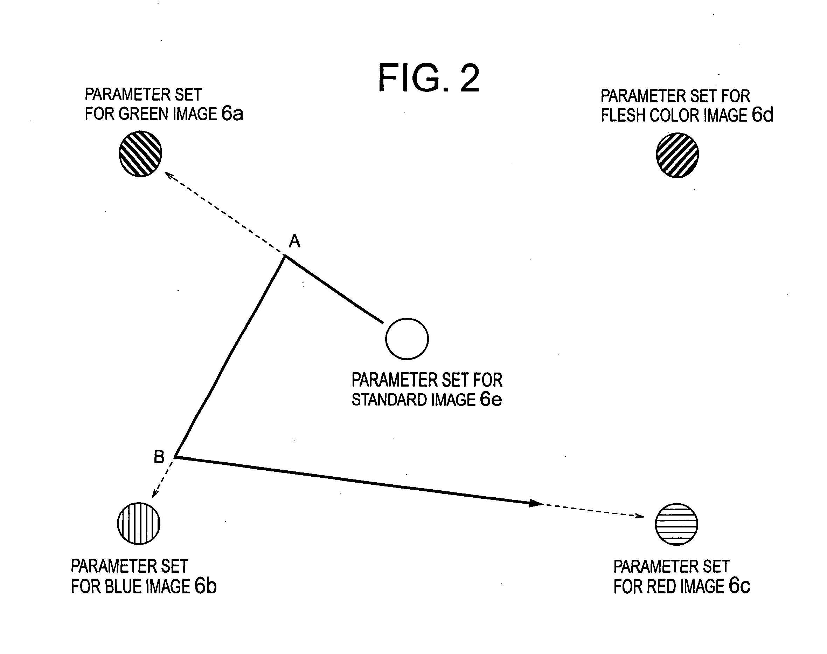

An image processing apparatus 1 according to a first embodiment of the present invention will be explained with reference to Figs. 1 and 2. As shown in Fig. 1, the image processing apparatus 1 includes an image input terminal 2, an image processing unit 3, an image output terminal 4, a scene judging unit 5, a parameter set receiving unit 6, a selector 7, a parameter mixing unit 8, and a parameter memory 9.

The image processing unit 3 as the adjusting device includes a brightness processing part 3a, a sharpness processing part 3b, and a color processing part 3c. With respect to an RGB formatted signal inputted from the image input terminal 2, the image processing unit 3 adjusts corresponding to adjusting levels respectively prescribed by the brightness, the sharpness, and the color (hue and chroma) as an image quality parameter given by the later-described parameter mixing unit 8, and the adjusted image is outputted from the image output terminal 4.

The brightness processing part 3a adjusts the brightness of the image signal inputted from the image input terminal 2 depending on a brightness parameter given by the parameter mixing unit 8, and outputs to the sharpness processing part 3b. The sharpness processing part 3b adjusts the sharpness of the inputted image signal depending on a sharpness parameter given by the parameter mixing unit 8, and outputs to the color processing part 3c. The color processing part 3c adjusts the color (hue and chroma) of the inputted image signal depending on a look-up table of the color (hue and chroma) given by the parameter mixing unit 8, and outputs to the image output terminal 4.

The scene judging unit 5 as the feature quantity extracting device, the change judging device, and the identifying device generates a hue histogram based on the image signal inputted from the image input terminal 2. The scene judging unit 5 judges the necessity of change of the later-described parameter set based on the generated hue histogram. When the change of the parameter set is necessary, the scene judging unit 5 identifies the parameter set used by the image processing unit 3 depending on a matching of each parameter set. The scene judging unit 5 outputs a selecting instruction of the identified parameter set to the selector 7, and outputs a control signal for notifying the change to the parameter mixing unit 8.

A parameter set receiving unit 6 as the group of image quality parameters receiving device is composed of a nonvolatile memory, and previously receives parameter sets as a plurality of groups of image quality parameters used by the image processing unit 3. The received parameter sets are 5 parameter sets which are a parameter set for green image 6a, a parameter set for blue image 6b, a parameter set for red image 6c, a parameter set for flesh color image 6d, and a parameter set for standard image 6e. Further, a look-up table arranging the parameters of brightness, sharpness, hue, chroma is received in each parameter set. In each parameter set, an adjusting value of image quality parameter optimizes a specific color to be an optimized image quality so that the specific color is more vivid, or emphasized. For example, in the parameter set for blue image 6b, a value of the image quality parameter makes a blue based image vivid. Further, in the parameter set for standard image 6e, a moderate value of the image quality parameter, not biased to any specific color is set.

The selector 7 as the selecting device of groups of image quality parameters selects the parameter set identified by the scene judging unit 5 from a plurality of parameter sets received in the parameter set receiving unit 6, and outputs the selected parameter set to the parameter mixing unit 8.

The parameter mixing unit 8 as the parameter-replacing device replaces the parameter set stored in the parameter memory 9 with the parameter set inputted from the selector 7 based on the control signal notifying the parameter change from the scene judging unit 5.

The parameter memory 9 as the memory device memories the parameter set outputted from the parameter mixing unit 8, namely, used by the image processing unit 3, and is composed of a RAM (Random Access Memory).

Next, in the image processing apparatus 1 shown in Fig. 1, an operation of image quality processing corresponding to a scene with respect to a moving image inputted from the image input terminal 2 and outputting from the image output terminal 4 will be explained.

First, just after the image processing apparatus 1 is started up, the parameter set for standard image 6e is outputted from the selector 7 to the parameter mixing unit 8 as a default parameter set. The parameter mixing unit 8 outputs the parameter set for standard image 6e both to the image processing unit 3 and to the parameter memory 9. In the image processing unit 3, depending on each image quality parameter in the parameter set for standard image 6e outputted from the parameter mixing unit 8, the brightness processing part 3a, the sharpness processing part 3b, and the color processing part 3c adjust the image inputted from the image input terminal 2, and output the image to the image output terminal 4. The parameter memory 9 memories a content of the parameter set for standard image 6e.

Next, in the scene judging unit 5, a hue histogram is generated per frame with respect to the image inputted from the image input terminal 2. Then, it is analyzed which hue has a large frequency, and necessity of a change of parameter set is judged. When the change of parameter set is necessary, the parameter set to be changed is identified owing to a matching of each parameter set. Then, the selector 7 receives an instruction of the parameter set to be changed, and a signal is outputted to the parameter mixing unit 8 for notifying the change of the parameter. The selector 7 selects the parameter set received in the parameter set receiving unit 6 depending on the control signal from the scene judging unit 5, and outputs the parameter set to the parameter mixing unit 8.

When the change of the parameter set is notified using the signal from the scene judging unit 5, the parameter mixing unit 8 gradually replaces values of the image quality parameter included in the parameter set received in the parameter memory 9, namely, the parameter set currently used by the image processing unit 3 with values of the image quality parameter included in the newly selected parameter set outputted from the selector 7.

An example of replacing of parameter set will be explained with reference to Fig. 2. Fig. 2 is an explanatory view explaining the replacing among five parameter sets. Positions of parameter sets are nothing to do with values of parameters in the real parameter sets. Further, an arrow in Fig. 2 shows an image of replacing. First, as described above, at the beginning of start up, the image processing apparatus 1 processes with the parameter set for standard image 6e. For example, when green is main color using the histogram in the scene judging unit 5, the change of parameter set is judged, and the parameter set for green image 6a is inputted from the selector 7 to the parameter mixing unit 8. The parameter mixing unit 8 gradually replaces the parameter set for standard image 6e stored in the parameter memory 9 with the parameter set for green image 6a.

The replacing of the values of the parameter will be explained in detail. It is assumed that the parameter set for green image 6a is defined as equations 1 to 3, and the parameter set for standard image 6e is defined as equations 4 to 6. Inputs of functions of the equations 1 to 6 are components of RGB of a pixel at a predetermined coordinates (x, y) on a screen. Namely, the equation 1 is a function for obtaining R (red) component in the parameter set for green image 6a. The equation 2 is a function for obtaining G (green) component in the parameter set for green image 6a. The equation 3 is a function for obtaining B (blue) component in the parameter set for green image 6a. The equation 4 is a function for obtaining R (red) component in the parameter set for standard image 6e. The equation 5 is a function for obtaining G (green) component in the parameter set for standard image 6e. The equation 6 is a function for obtaining B (blue) component in the parameter set for standard image 6e. Incidentally, the function may be replaced with a look-up table describing output values corresponding to input values. The parameter set for green image 6a is a function to allow green color to be seen thicker and more vivid.

$$R\,(x,\,y) = Far\,(R\,(x,\,y),\,G\,(x,\,y),\,B\,(x,\,y)) \qquad \dots \text{equation 1}$$

$$G\,(x,\,y) = Fag\,(R\,(x,\,y),\,G\,(x,\,y),\,B\,(x,\,y)) \qquad \dots \text{equation 2}$$

$$B\,(x,\,y) = Fab\,(R\,(x,\,y),\,G\,(x,\,y),\,B\,(x,\,y)) \qquad \dots \text{equation 3}$$

$$R\,(x,\,y) = Fer\,(R\,(x,\,y),\,G\,(x,\,y),\,B\,(x,\,y)) \qquad \dots \text{equation 4}$$

$$G\,(x,\,y) = Fag\,(R\,(x,\,y),\,G\,(x,\,y),\,B\,(x,\,y)) \qquad \dots \text{equation 5}$$

$$B\,(x,\,y) = Fab\,(R\,(x,\,y),\,G\,(x,\,y),\,B\,(x,\,y)) \qquad \dots \text{equation 6}$$

In Fig. 2, at a point A where the parameter set for standard image 6e is replaced with the parameter set for green image 6a, values of parameter is a combination of the parameter set for green image 6a and the parameter set for standard image 6e, and expressed by equations 7 to 9.

$$R(x, y) = N * Far(R(x, y), G(x, y), B(x, y)) + M * Fer(R(x, y), G(x, y), B(x, y))$$

$$\ldots \text{equation } 7$$

$$G(x, y) = N * Fag(R(x, y), G(x, y), B(x, y)) + M * Feg(R(x, y), G(x, y), B(x, y))$$

$$\ldots \text{equation } 8$$

$$B(x, y) = N * Fab(R(x, y), G(x, y), B(x, y)) + M * Feb(R(x, y), G(x, y), B(x, y))$$

$$\ldots \text{equation } 9$$

Here, N and M is a ratio for combining parameter set for green image 6a and parameter set for standard image 6e, and expressed as follows.

$$N + M = 1 \qquad \ldots \text{equation } 10$$

Accordingly, the combination of the parameter set for green image 6a and the parameter set for standard image 6e is changed by changing the values of N and M. Further, other parameter except N and M may be used as a third parameter. Incidentally, a color of the image quality parameter has been explained. However, other parameters such as brightness and sharpness may be similarly used. Further, a combination of those is similarly used.

Further, "gradually replacing" means a replacement from the before-changed parameter set to the after-changed parameter set by gradually changing the ratio of N and M. For example, a combination of (N, M) is changed to (0, 1), (0.1, 0.9), (0.2, 0.8), (0.3, 0.7). The way to change N and M may be linear or non-linear. Further, a pitch of the changing value may be smaller. Further, when the value of the parameter is not controlled by a function, and amount of adjustment is directly instructed, the amount of adjustment may be gradually changed from the before-changed to the after-changed amount of adjustment. The parameter set while replacing is stored in the parameter memory 9 at any time.

At the point A in Fig. 2, when the scene judging unit 5 judges that the blue is a main color due to the hue histogram, it is judged to change parameter set, and the parameter set for blue image 6b is outputted from the selector 7 to the parameter mixing unit 8. The parameter mixing unit 8 stops replacing the parameter set for standard image 6e with the parameter set for green image 6a. At this time, the replacing parameter set (a combination of values of the parameter set for standard image 6e and the parameter set for green image 6a, and a combination of M and N where 0 < M < 1 and 0 < N < 1, and N + M = 1) is received in the parameter memory 9. Then, the replacing parameter set is gradually replaced with the parameter set for blue image 6b. Next, at a point B where replacing with the parameter set for blue image 6b, when the scene judging unit 5 judges that red becomes a main color, the scene judging unit 5 judges to change the parameter set. Thus, the parameter set for red image 6c is outputted from the selector 7 to the parameter mixing unit 8. The parameter mixing unit 8 stops replacing with the parameter set for blue image 6b. At this time, the parameter memory 9 stores the replacing parameter set. Then, the replacing parameter set is gradually replaced with the parameter set for red image 6c.

The image processing unit 3 processes using the replacing parameter set whenever necessary. Therefore, the image outputted from the 4 reflects the replacing. Namely, the image quality of the output image is gradually changed.

According to this embodiment, the image processing apparatus 1 prepares a plurality of parameter sets 6a to 6e having a plurality of image quality parameters with respect to the image quality of the inputted value, and adjusts image quality by changing the parameter sets 6a to 6e depending on a judgement result of the scene judging unit 5. When changing from the currently used parameter set to a new parameter set, the image processing apparatus 1 gradually replaces the values of each parameter in the parameter set with values of the new parameter, and stores the new parameter in parameter memory 9. Further, when the parameter change is occurred while the parameter is replacing, the value of replacing parameter set stored in the parameter memory 9 is gradually replaced with the values of the next parameter set. Thus, a viewer hardly feels a sense of incompatibility, and because the values of the parameter is gradually changed and replaced, a larger number of values of parameter is realized with a smaller number of parameter sets.

[Second embodiment]

Next, an image processing apparatus 50 according to a second embodiment of the present invention will be explained. Incidentally, parts identical to the first embodiment are assigned the same numbers and an explanation of their operation is therefore omitted here.

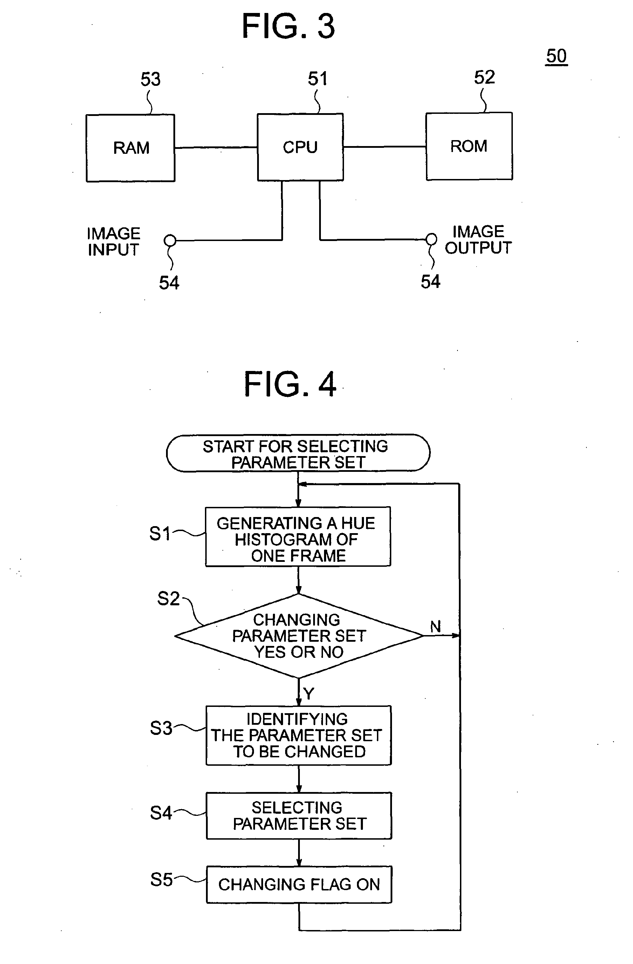

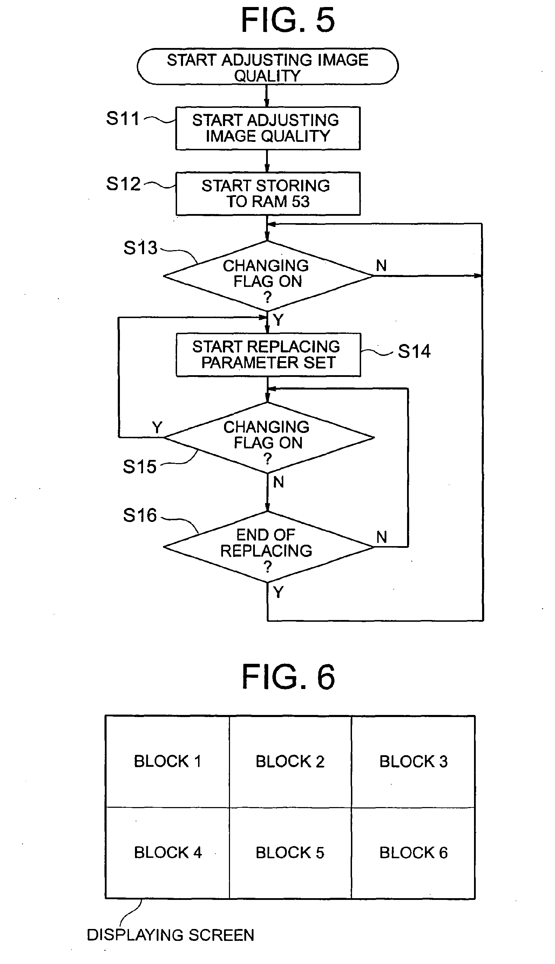

The first embodiment is composed of hardware, however, the second embodiment is a computer program. Fig. 3 shows a block diagram of the computer, Fig. 4 shows a flowchart of parameter set selecting operation of the image processing program, and Fig. 5 shows a flowchart of image quality adjustment operation of the image processing program.

A computer 50 of the image processing apparatus for operating the image processing program according to the second embodiment includes a CPU (Central Processing Unit) 51, a ROM (Read Only Memory) 52, a RAM 53, an image input terminal 54, and an image output terminal 55.

The computer 50 adjusts image quality of an RGB-format image inputted from the image input terminal 54 by running an image processing program stored in the ROM 52 with the CPU 51. The image quality adjusted image is outputted from the image output terminal 55. Similar to the first embodiment, the ROM 52 as the group of image quality parameters receiving member previously receives five parameter sets of the parameter set for green image 6a, the parameter set for blue image 6b, the parameter set for red image 6c, the parameter set for flesh color image 6d, and the parameter set for standard image 6e.

A parameter set selection operation according to the second embodiment will be explained with reference to the flowchart of Fig. 4.

First, in step S1 as the feature quantity extracting device, when an image per one frame is inputted, a hue histogram with respect to the frame is generated and a process goes to step S2.

Next, in step S2 as the change judging device, the necessity of change of parameter set is judged according to the hue histogram generated in step S1. When the change is necessary ("Y" in S2), the process goes to step S3. When the change is not necessary ("N" in S2), the process goes to step S1.

Next, in step S3 as the identifying device, a parameter set to be changed is identified according to the matching with each parameter set stored in the ROM 52, and the process goes to step S4.

Next, in step 4 as the selecting device for selecting a group of image quality parameters, the parameter set identified in step S3 is selected from the ROM 52, and the process goes to readout step S5.

Next, in step S5, a parameter changing flag is on, and the process goes to step S1.

An image quality adjusting operation according to the second embodiment will be explained with reference to the flowchart of Fig. 5.

First, in step S11 as the adjusting device, the image adjusting operation is started with the parameter set read out from the ROM 52, and the process goes to S12. Incidentally, similar to the first embodiment, the image quality parameter to be adjusted is brightness, sharpness, color (hue, chroma). Further, the adjusting operation is hereafter continued.

Next, in step S12 as the memory device, the currently image adjusting parameter set is started to be stored in the RAM 53, and the process goes to step S13. Incidentally, the storing operation is hereafter continued.

Next, in step S13, whether the parameter set changing flag is on or not is judged. When the flag is on ("Y" in S13), the process goes to step S14 and the flag is turned off. When the flag is off ("N" in S13), the judgement is done again.

Next, in step S14 as the parameter-replacing device, the replacement from the before-changed parameter set stored in the RAM 53 to the after-changed parameter set selected from the ROM 52 is started, and the process goes to step S15. Similar to the first embodiment, the parameter set is gradually replaced.

Next, in step S15, whether the parameter set changing flag is on or not is judged. When the flag is on ("Y" in S15), the process goes to S14, and the flag is turned off. When the flag is off ("N" in S15), the process goes to S16.

Next, in step S16, whether the replacement from the before-changed parameter set to the after-changed parameter set is finished or not is judged. When the replacement is finished ("Y" in S16), the process goes to step S13. When the replacement is not finished ("N" in S16), the process returns to S15.

According to the second embodiment, the hue histogram is generated in step S1, and the necessity of change of parameter set is judged in step S2. When the change is necessary, a new parameter set is identified and selected in steps S3 and S4. Then, in step S14, the parameter set is gradually replaced. Incidentally, because in steps S11 and S12, the image quality adjustment and the storing in the RAM 53 are started, the replacing parameter set is stored in the RAM 53 and used in the adjustment while replacing. Further, when the change of the parameter set is detected in step S15 while replacing, the replacement from the replacing parameter set to the new parameter set is done in step S14. Thus, similar to the first embodiment, a viewer hardly feels a sense of incompatibility. Further, because the values of the parameter is gradually changed and replaced, a larger number of values of parameter is realized with a smaller number of parameter sets. Further, because the adjustment is attained with software, an exclusive hardware is not necessary and flexibility of a system of the adjustment is increased.

Incidentally, in the second embodiment, parameter replacing time in the parameter mixing unit 8 is not defined. However, the replacing time may be fixed or variable. If the replacing time is variable, when a degree of change is large, for example, when changing the channel or turning to a commercial, the replacing time may be short. When the degree of change is small, for example the image moves slowly right to left, the replacing time may be long. Accordingly, a viewer further hardly feels a sense of incompatibility. In this case, the scene judging unit 5 detects the degree of change of the scene, and outputs to the parameter mixing unit 8 as a replacing time changing device, and the parameter mixing unit 8 changes the replacing time.

In the second embodiment, one parameter set is used for a whole display screen. However, as shown in Fig. 6, the display screen may be divided to a plurality of blocks, feature quantity of the image may be extracted at each block, and the parameter set may be replaced at each block. Further, the parameter set may be gradually replaced between adjoined blocks in the display screen, for example, a block 1 and a block 2. Thus, the image quality is adjusted in detail, so that the image can be displayed according to the feature quantity of the images in blocks, and spatial reproducibility of the images in blocks can be smooth and natural.

Further, in the second embodiment, the hue histogram is used for indicating the feature quantity. However, the present invention is not limited to this. Anything used for judging the feature quantity of the image can be used, for example, a histogram of chroma or brightness, distribution of space frequency component, noise amount included in the image, existence of characters, electric field intensity.

Further, in the second embodiment, the parameter set as a group of image quality parameters to be adjusted is brightness, sharpness, hue, and chroma. However, this invention is not limited to this. Parameter with regard to image quality or display of the image can be used, for example, intensity of noise reduction, change of IP (Interlace to Progressive) system, change of scaler factor.

Further, in the second embodiment, the hue histogram is generated per frame for indicating the feature quantity, and the change of parameter set is judged using the hue histogram. However, this invention is not limited to this. The judgement may be done per field or per a plurality of frames.

Further, this invention is not limited to the moving image. This invention can be used for discontinuous images, for example, a slide show in which a plurality of still images are displayed at prescribed intervals of time.

Further, the image processing apparatus of the present invention can be used for an apparatus being able to adjust image quality, such as a television, a monitor display, a television tuner, a DVD player/recorder, a DVD player/ recorder with an HDD (Hard Disk Drive), a VCR (Video Cassette Recorder) or the like.

According to the embodiments described above, the image processing apparatus, the image processing method, and the image processing program as following are attained.

(Note 1)

An image processing apparatus 1 having an image processing unit 3 for adjusting image quality with predetermined brightness, sharpness, hue, chroma corresponding to inputted images, said apparatus 1 including:

a parameter set receiving unit 6 for receiving a plurality of parameter sets including brightness, sharpness, hue, chroma;
a scene judging unit 5 for extracting a hue histogram of the inputted image;
the scene judging unit 5 for judging necessity of change of parameter set used by the image processing unit 3 depending on the hue histogram;
the scene judging unit 5 for identifying a new parameter set from a plurality of parameter sets received in the parameter set receiving unit 6 when the scene judging unit 5 judges that changing the parameter set is necessary;
a selector 7 for selecting the parameter set identified by the scene judging unit 5 from the parameter set receiving unit 6; and
a parameter mixing unit 8 for gradually replacing values of brightness, sharpness, hue, chroma included in the before-changed parameter set with values of brightness, sharpness, hue, chroma included in the parameter set identified by the scene judging unit 5 and selected by the selector 7 when the scene judging unit 5 judges that change of parameter set is necessary, and for make the image processing unit 3 use the parameter set.

According to the image processing apparatus 1, because the image quality of the image is gradually changed, when brightness, sharpness, hue, or chroma changes in the moving image, the change of the image quality is small, and a viewer hardly feels a sense of incompatibility.

(Note 2)

An image processing method of adjusting image quality of an inputted image with previously stored brightness, sharpness, hue, and chroma, said method comprising the steps of:

extracting a hue histogram of the inputted image from the inputted image;
identifying and selecting a parameter set corresponding to the inputted image from among the parameter sets including brightness, sharpness, hue, and chroma for adjusting the inputted image based on the hue histogram; and adjusting and replacing gradually values of brightness, sharpness, hue, chroma included in a before-changed parameter set with values of brightness, sharpness, hue, chroma included in an after-changed and selected brightness, sharpness, hue, chroma when changing the parameter set is necessary based on the hue histogram.

According to the image processing method, because the image quality of the image is gradually changed, when brightness, sharpness, hue, or chroma changes in the moving image, the change of the image quality is small, and a viewer hardly feels a sense of incompatibility.

(Note 3)

An image processing program for operating a computer of an image processing apparatus for adjusting image quality of an inputted image with previously stored brightness, sharpness, hue, and chroma, said program comprising:

step S11 for adjusting image quality of the inputted image with brightness, sharpness, hue, and chroma;
ROM 52 for receiving a plurality of parameter set including brightness, sharpness, hue, and chroma used in step S11;
step S1 for extracting a hue histogram of the inputted image from the inputted image;
step S2 for judging necessity of change of the parameter set used in step S11 based on the hue histogram;
step S3 for identifying a new parameter set from among the parameter sets stored in the ROM 52 when in step S2 changing the parameter set is judged necessary;
step S4 for selecting the parameter set identified in step S3 from the ROM 52; and
step S14 for gradually replacing values of brightness, sharpness, hue, chroma included in a before-changed parameter set with values of brightness, sharpness, hue, chroma included in the parameter set identified in step S3 and selected in step S4 when in step S2 changing the parameter set is judged necessary, said step S14 for making step 11 use the parameter set.

According to the image processing program, because the image quality of the image is gradually changed, when brightness, sharpness, hue, or chroma changes in the moving image, the change of the image quality is small, and a viewer hardly feels a sense of incompatibility.
Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

**Claims**

1. An image processing apparatus having an image adjusting device for adjusting image quality of an inputted image with a predetermined group of image quality parameters, said apparatus comprising:

a group of image quality parameters receiving device for receiving a plurality of groups of image quality parameters including at least one image quality parameter;
a feature quantity extracting device for extracting data indicating feature quantity of the inputted image from the inputted image;
a change judging device for judging necessity of change of the image quality parameter used for the adjusting device based on the data indicating the feature quantity;
an identifying device for identifying a new group of image quality parameters from among the groups of image quality parameters received in the receiving device when the change judging device judges that changing the group of image quality parameters is necessary;
a selecting device for selecting the group of image quality parameters identified by the identifying device from the receiving device; and

a parameter-replacing device for gradually replacing values of the image quality parameter included in former selected group of image quality parameters with values of the image quality parameter included in the group of image quality parameters identified by the identifying device and selected by the selecting device when the judging device judges that changing the group of image quality parameters is necessary, said parameter-replacing device making the adjusting device use the group of image quality parameters.

2. The image processing apparatus as claimed in claim 1,
   further comprising a memory device for memorizing the group of image quality parameters used by the adjusting device,
   wherein the replacing device gradually replaces values of the image quality parameter included in the group of image quality parameters stored in the memory device with values of the image quality parameter included in the group of image quality parameters selected by the selecting device, and makes the adjusting device use the group of image quality parameters.

3. The image processing apparatus as claimed in claim 1 or claim 2,
   wherein the extracting device extracts the feature quantity at every frame.

4. The image processing apparatus as claimed in any one of claims 1 to 3,
   wherein the data indicating the feature quantity extracted by the extracting device is a histogram.

5. The image processing apparatus as claimed in any one of claims 1 to 4,
   wherein the image quality parameter included in the group of image quality parameters includes at least one of brightness, sharpness, hue, and chroma.

6. The image processing apparatus as claimed in any one of claims 1 to 5,
   further comprising a replacing time changing device for changing the replacing time when the replacing device replaces the values of the image quality parameter.

7. An image processing method of adjusting image quality of an inputted image with a predetermined group of image quality parameters, said method comprising the steps of:

   extracting data indicating feature quantity of the inputted image from the inputted image;
   identifying and selecting a group of image quality parameters corresponding to the inputted image from among the groups of image quality parameters including at least one of the image quality parameter for adjusting the inputted image based on the data indicating the feature quantity; and
   adjusting and replacing gradually values of the image quality parameter included in a before-changed group of image quality parameters with values of the image quality parameter included in a group of image quality parameters selected after judging a change thereof, when changing the group of image quality parameters used for adjusting is necessary based on the data indicating the feature quantity.

8. An image processing program for operating a computer of an image processing apparatus for adjusting image quality of an inputted image with a predetermined group of image quality parameters, said program comprising:

   an image adjusting device for adjusting image quality of the inputted image with the image quality parameter;
   a group of image quality parameters receiving device for receiving a plurality of groups of image quality parameters including at least one image quality parameter used by the adjusting device;
   a feature quantity extracting device for extracting data indicating feature quantity of the inputted image from the inputted image;
   a change judging device for judging necessity of change of the image quality parameter used for the adjusting device based on the data indicating the feature quantity;
   an identifying device for identifying a new group of image quality parameters from among the group of image quality parameters received in the receiving device when the change judging device judges that changing the group of image quality parameters is necessary;
   a selecting device for selecting the group of image quality parameters identified by the identifying device from the receiving device; and
   a parameter-replacing device for gradually replacing values of the image quality parameter included in a before-changed group of image quality parameters with values of the image quality parameter included in the group of image quality parameters identified by the identifying device and selected by the selecting device when the judging device judges that changing the group of image quality parameters is necessary, said parameter-replacing device making the adjusting device use the group of image quality parameters.

# FIG. 1

IMAGE INPUT ○——— 2

IMAGE PROCESSING UNIT    3b    3c ~3

BRIGHTNESS — SHARPNESS — COLOR

3a

IMAGE OUTPUT ○——— 2

1

5~ SCENE JUDGING UNIT

8~ PARAMETER MIXING UNIT

9~ PARAMETER MEMORY

SELECTOR ~7

PARAMETER SET FOR GREEN IMAGE

PARAMETER SET FOR BLUE IMAGE

PARAMETER SET FOR RED IMAGE

PARAMETER SET FOR FLESH COLOR IMAGE

PARAMETER SET FOR STANDARD IMAGE

~7

PARAMETER SET RECEIVING UNIT   6a    6b    6c    6d    6e

EP 1 848 208 A2

# FIG. 2

PARAMETER SET
FOR GREEN IMAGE 6a

PARAMETER SET FOR
FLESH COLOR IMAGE 6d

A

PARAMETER SET FOR
STANDARD IMAGE 6e

B

PARAMETER SET
FOR BLUE IMAGE 6b

PARAMETER SET
FOR RED IMAGE 6c

# FIG. 3

50

```
  53              51              52
  ┌─────┐       ┌─────┐       ┌─────┐
  │ RAM │───────│ CPU │───────│ ROM │
  └─────┘       └─────┘       └─────┘
```

IMAGE
INPUT  ○────────┘      └────────○  IMAGE
                                   OUTPUT
54                            54

# FIG. 4

START FOR SELECTING
PARAMETER SET

S1 — GENERATING A HUE
HISTOGRAM OF
ONE FRAME

S2 — CHANGING
PARAMETER SET
YES OR NO                N

Y

S3 — IDENTIFYING
THE PARAMETER SET
TO BE CHANGED

S4 — SELECTING
PARAMETER SET

S5 — CHANGING FLAG ON

# FIG. 5

START ADJUSTING IMAGE
QUALITY

S11 — START ADJUSTING
IMAGE QUALITY

S12 — START STORING
TO RAM 53

S13 — CHANGING
FLAG ON
? — N

Y

START REPLACING
PARAMETER SET — S14

Y — CHANGING
FLAG ON
?

S15 — N

S16 — END OF
REPLACING
? — N

Y

# FIG. 6

| BLOCK 1 | BLOCK 2 | BLOCK 3 |
|---------|---------|---------|
| BLOCK 4 | BLOCK 5 | BLOCK 6 |

DISPLAYING SCREEN

**EP 1 848 208 A2**

**REFERENCES CITED IN THE DESCRIPTION**

**Patent documents cited in the description**

- JP 2006114562 A
- JP 2000316095 A
- JP 2001230941 A
- JP 2005192158 A

17